## Europäisches Patentamt
### European Patent Office
### Office européen des brevets

(19)

(11) Veröffentlichungsnummer : **0 397 692 B1**

(12)

# EUROPÄISCHE PATENTSCHRIFT

(45) Veröffentlichungstag der Patentschrift :
**29.01.92 Patentblatt 92/05**

(51) Int. Cl.$^5$ : **B62D 5/097**, B62D 5/087

(21) Anmeldenummer : **89900808.0**

(22) Anmeldetag : **12.11.88**

(86) Internationale Anmeldenummer :
**PCT/EP88/01034**

(87) Internationale Veröffentlichungsnummer :
**WO 89/04788 01.06.89 Gazette 89/12**

(54) **HYDROSTATISCHE HILFSKRAFT-LENKEINRICHTUNG, INSBESONDERE FÜR KRAFTFAHRZEUGE.**

(30) Priorität : **26.11.87 DE 3740120**

(43) Veröffentlichungstag der Anmeldung :
**22.11.90 Patentblatt 90/47**

(45) Bekanntmachung des Hinweises auf die
Patenterteilung :
**29.01.92 Patentblatt 92/05**

(84) Benannte Vertragsstaaten :
**DE FR GB IT**

(56) Entgegenhaltungen :
**EP-A- 245 794
DE-C- 3 132 342
FR-A- 2 238 346
US-A- 3 455 210
US-A- 3 492 817**

(73) Patentinhaber : **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder : **FASSBENDER, Rolf
Goethestrasse 39
W-7075 Mutlangen (DE)**

EP 0 397 692 B1

## Beschreibung

Die Erfindung betrifft eine hydrostatische Hilfskraft-Lenkeinrichtung, insbesondere für Kraftfahrzeuge, nach dem Oberbegriff des Anspruches 1. Die Hilfskraft-Lenkeinrichtung enthält eine Dosiereinrichtung und eine Steuerventileinrichtung, die das von einer Verstellpumpe bzw. von einer Konstantpumpe über ein Stromteilventil geförderte Druckmittel einem Lenkmotor zusteuert. In der Druckleitung ist eine Blende angeordnet, durch deren Druckdifferenz eine Verstelleinrichtung der Verstellpumpe bzw. des Stromteilventils betätigbar ist. Der Zulauf aus der Druckleitung in die Ventilbohrung wird dabei über einen zentralen Kolbenbund gesteuert, der an einem in der Ventilbohrung verschiebbar gelagerten Ventilkolben angeordnet ist.

Eine derartige hydrostatische Hilfskraft-Lenkeinrichtung ist beispielsweise bekannt aus der DE-PS 31 32 342. Mit einer solchen Lenkeinrichtung wird der Druckmittelstrom lastabhängig der bevorrechtigten Lenkung zugeführt. Dabei ist die Blende für die lastabhängige Leistungszuteilung mit konstantem Querschnitt ausgeführt.

Über die Blende wird in Neutralstellung der Steuerventileinrichtung ein ständiger Pilotstrom gefördert. Bei einer Verstellung der Steuerventileinrichtung werden bereits nach einem kleinen Ventilverstellweg die Verbindungen zu der Dosiereinrichtung und zu dem Lenkmotor gesteuert. Der Pilotstrom muß dann gedrosselt werden, damit ein Druck angeregelt wird, der dem Lenkwiderstand entspricht. Der Druck steigt mit zunehmender Ventilverstellung an. Wenn der angeregelte Druck den Lenkwiderstand überwindet, so wird vor der Blende Druckmittel abgezweigt und über die Dosiereinrichtung dem Lenkmotor zugeführt. Dadurch wird die Druckdifferenz über der Blende verändert, so daß die Verstellung der Verstellpumpe einsetzt. Bei hohen Lenkwiderständen wird die Verstellpumpe erst bei nahezu vollständig ausgelenktem Steuerventil ein Regelsignal bekommen. Das späte Regelsignal führt zu dynamischen Problemen, z. B. zu Schwingungen im Lenksystem.

Der Erfindung liegt die Aufgabe zugrunde, die bekannte hydrostatische Hilfskraft-Lenkeinrichtung derart zu verbessern, daß der Verstellpumpe unabhängig vom Lenkwiderstand bereits frühzeitig ein Regelsignal zugeführt wird. Dabei soll die neue Einrichtung innerhalb der Abmessungen der bekannten Steuerventileinrichtung untergebracht werden.

Diese Aufgabe wird erfindungsgemäß durch die im Anspruch 1 gekennzeichnete hydrostatische Hilfskraft-Lenkeinrichtung gelöst. Dabei weist die Blende einen in Abhängigkeit von der Schaltstellung des Steuerventils veränderbaren Querschnitt auf, der in der neutralen Mittelstellung des Steuerventils seinen kleinsten Wert besitzt und bei einer Verstellung des Ventils in beiden Richtungen vergrößerbar ist. Dies wird dadurch erreicht, daß die Blende zwischen dem Einmündungsquerschnitt der Druckleitung in die Ventilbohrung und dem zentralen Kolbenbund gebildet ist. Da der Ventilkolben hinsichtlich der Blende nach beiden Richtungen symmetrisch ausgebildet ist, ist die Veränderung des Blendenquerschnittes in beiden Lenkrichtungen gleich. Die veränderbare Blende und ihre Steuerungsmittel können in den Abmessungen der bekannten Steuerventileinrichtung untergebracht werden. Durch die erfindungsgemäße Anordnung und Ausgestaltung der Blende wird der Verstellpumpe bereits nach einem sehr kleinen Verstellweg des Steuerventils ein Regelsignal zugeleitet, so daß eine schwingungsfreie Regelung der Verstellpumpe möglich ist.

Wird die Breite des zentralen Kolbenbundes größer ausgeführt als die größte axiale Erstreckung des Einmündungsquerschnitts der Druckleitung in die Ventilbohrung, so ist die Druckleitung in der neutralen Mittelstellung der Steuerventileinrichtung geschlossen. Der kleinste Querschnitt der Blende hat in dieser Stellung den Wert Null. Zweckmäßigerweise wird der hinter der Blende liegende Abschnitt der Druckleitung und die Steuerleitung durch einen gemeinsamen Anschluß, der im Bereich des zentralen Kolbenbundes liegt, an die Kolbenbohrung angeschlossen. Wird dabei die Breite des zentralen Kolbenbundes kleiner ausgelegt als die kleinste axiale Erstreckung des Querschnittes des gemeinsamen Anschlusses, so wird auf einfache Weise die Steuerleitung in der neutralen Mittelstellung der Steuerventileinrichtung mit der Rücklaufleitung verbunden.

Soll die erfindungsgemäße Einrichtung bei einer hydrostatischen Hilfskraft-Lenkeinrichtung eingesetzt werden, bei der auch in der neutralen Mittelstellung ein kleiner Kurzschlußölstrom zur Erwärmung durch die Steuerventileinrichtung geführt werden soll, so wird zweckmäßigerweise der zentrale Kolbenbund an seinem Umfang mit einem umlaufenden Einstich versehen. Dadurch ist eine Verbindung des Einmündungsquerschnittes der Druckleitung in die Ventilbohrung mit dem gemeinsamen Anschluß für den hinter der Blende liegenden Abschnitt der Druckleitung und die Steuerleitung und damit mit der Rücklaufleitung möglich.

Im folgenden wird die Erfindung anhand zweier in der Zeichnung dargestellter Ausführungsbeispiele näher erläutert. Es zeigen:

Fig. 1 einen Querschnitt durch die erfindungsgemäße hydrostatische Hilfskraft-Lenkeinrichtung, teilweise in schematischer Darstellung;

Fig. 2 einen Querschnitt durch die Steuerventileinrichtung eines ersten Ausführungsbeispieles in vereinfachter Darstellung;

Fig. 3 einen Querschnitt durch die Steuerventileinrichtung eines zweiten Ausführungsbeispieles in vereinfachter Darstellung.

In der erfindungsgemäßen hydrostatischen Hilfskraft-Lenkeinrichtung ist ein innenverzahnter Zahnring 1 zwischen einem Deckel 2 und einem Umlenkzwischenring 3 eines Gehäuses 4 angeordnet und mit diesem und einem weiteren Abschlußdeckel 5 durch nicht dargestellte Schrauben verbunden. Ein außenverzahntes Zahnrad 6 weist einen Zahn weniger als der Zahnring 1 auf und bildet zusammen mit diesem eine Dosiereinrichtung 7 in der Form einer Handzahnradpumpe. Zwischen den Zähnen von Zahnring 1 und Zahnrad 6 und den an den beiden Teilen angrenzenden Stirnflächen des Deckels 2 und des Umlenkzwischenringes 3 werden Verdrängerkammern 8 gebildet.

Das Zahnrad 6 ist über eine Gelenkwelle 10 und einen Mitnehmerstift 11 mit Verdrehspiel mit einer Antriebswelle 12 verbunden. Die Antriebswelle 12 trägt eine hohle Betätigungshülse 13.

In einer in dem Gehäuse 4 angeordneten Ventilbohrung 14 ist ein Ventilkolben 15 koaxial zu der Betätigungshülse 13 gelagert. Der Ventilkolben 15 ist über zwischen der Betätigungshülse 13 und dem Ventilkolben 15 angeordnete Steilgewindeprofile 16 bei einer Drehbewegung der Antriebswelle 12 in beiden Richtungen axial verschiebbar. Zwischen der Gelenkwelle 10 und der Antriebswelle 12 ist ein Federelement 17 angeordnet.

Der Ventilkolben 15 bildet in der Ventilbohrung 14 zusammen mit den umgebenden Teilen eine Steuerventileinrichtung 18. An dem Ventilkolben 15 und in der Ventilbohrung 14 sind in bekannter Weise Nuten für die Steuerung des Druckmittels zu und von den Verdrängerkammern 8 der Dosiereinrichtung 7 und zu und von den Druckräumen eines Lenkmotors 20 angeordnet. Für die erfindungsgemäße Funktion der Lenkeinrichtung ist von Bedeutung, daß der Ventilkolben 15 einen zentralen Kolbenbund 21 und benachbart dazu je eine Kolbennut 22 bzw. 23 aufweist, die durch je einen weiteren Kolbenbund 24 bzw. 25 begrenzt sind. Im Bereich der axialen Erstreckung des zentralen Kolbenbundes 21 ist eine zu der Ventilbohrung 14 führende Einmündung 26 einer Druckleitung 27 angeordnet, durch die von einer Hochdruckpumpe 28 mit veränderbarem Fördervolumen (im folgenden kurz "Verstellpumpe" genannt) Druckmittel aus einem Druckmittelbehälter 30 zu der Steuerventileinrichtung 18 geleitet wird. Die Einmündung 26 befindet sich in einem zylindrischen Gehäusesteg 31, an den sich beiderseits je eine Rücklaufnut 32 bzw. 33 anschließt. Die Rücklaufnuten 32 und 33 stehen über eine Rücklaufleitung 34 mit dem Druckmittelbehälter 30 in Verbindung.

Zwischen dem Querschnitt der Einmündung 26 der Druckleitung 27 in die Ventilbohrung 14 und dem zentralen Kolbenbund 21 ist eine Blende 35 in der Form von zwei veränderbaren Steueröffnungen 35A und 35B gebildet. Die Steueröffnungen 35A und 35B und damit die Blende 35 sind in der neutralen Mittelstellung des Ventilkolbens 15 geschlossen.

Die Blende 35 dient zur Erzeugung einer Druckdifferenz, die für die Verstellung der Verstellpumpe 28 benötigt wird. Im Bereich der axialen Erstreckung des zentralen Kolbenbundes 21 mündet in die Ventilbohrung 14 ein gemeinsamer Anschluß 36 für einen hinter der Blende 35 liegenden Abschnitt 37 der Druckleitung 27 und für eine Steuerleitung 38. Über die Steuerleitung 38 wird der hinter der Blende 35 herrschende Druck an eine Verstelleinrichtung 40 der Verstellpumpe 28 übertragen. Anstelle der Verstellpumpe 28 kann eine Kontantpumpe mit einem lastabhängig verstellbaren Stromteilventil vorgesehen werden.

Die Breite des zentralen Kolbenbundes 21 ist kleiner als die kleinste axiale Erstreckung des Querschnittes des gemeinsamen Anschlusses 36. Die Breite des zylindrischen Gehäusesteges 31 ist kleiner als der Abstand der beiden Kolbenbunde 24 und 25. Dadurch ist gewährleistet, daß die Steuerleitung 38 in der neutralen Mittelstellung des Ventilkolbens 15 über die Kolbennuten 22 und 23, die Rücklaufnuten 32 und 33 und die Rücklaufleitung 34 mit dem Druckmittelbehälter 30 verbunden ist.

An den beiden Enden des Ventilkolbens 15 ist je eine Umfangsreihe von Verteilerlängsnuten 41 bzw. 42 angeordnet, die bei einer Axialverschiebung des Ventilkolbens 15 mit einem von zwei stirnseitig an den Ventilkolben 15 angrenzenden Druckräumen 43 bzw. 44 verbunden werden. Die Verteilerlängsnuten 41 und 42 dienen außerdem als Kommutierungsnuten und sind über zwei Leitungen 45 und 46 in bekannter Weise an die Druckkammern 8 der Dosiereinrichtung 7 angeschlossen.

Um einen vollständigen radialen Druckausgleich in der Steuerventileinrichtung 18 zu erreichen, ist es zweckmäßig, in einer Ebene die Einmündung 26 und in einer anderen Ebene den gemeinsamen Anschluß 36 jeweils zweimal gegenüberliegend auszuführen.

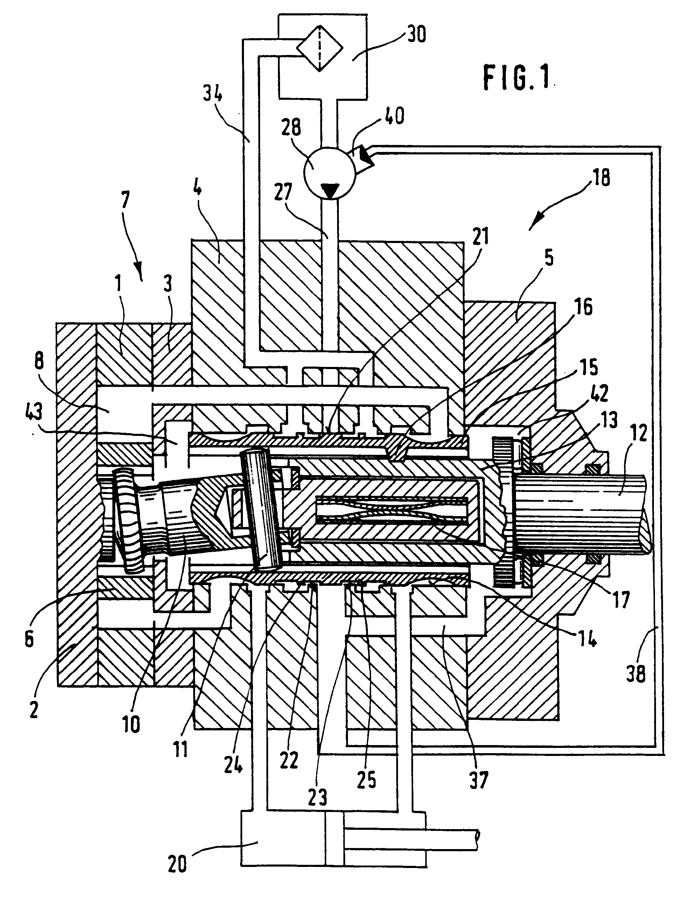

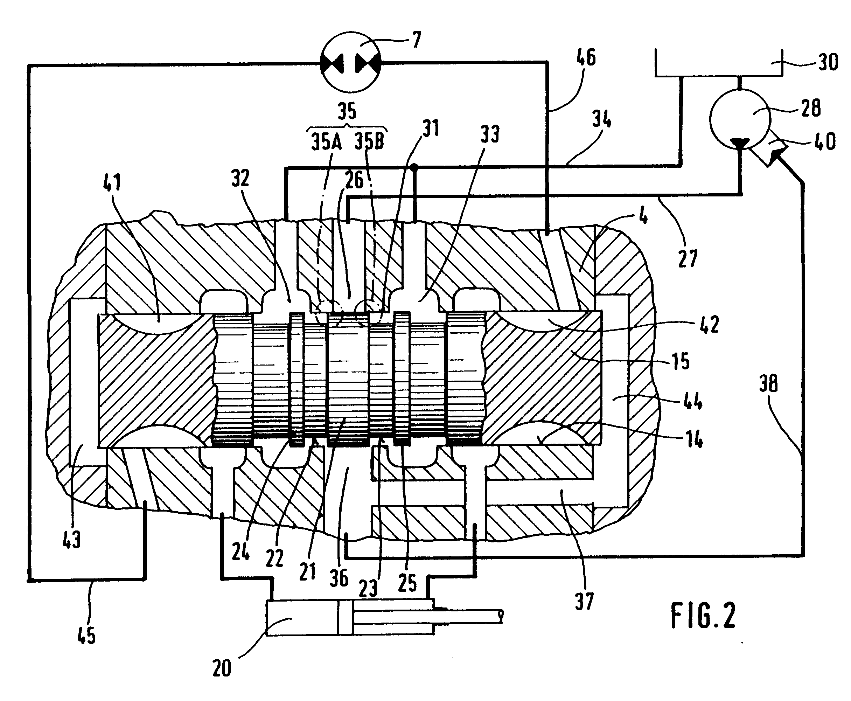

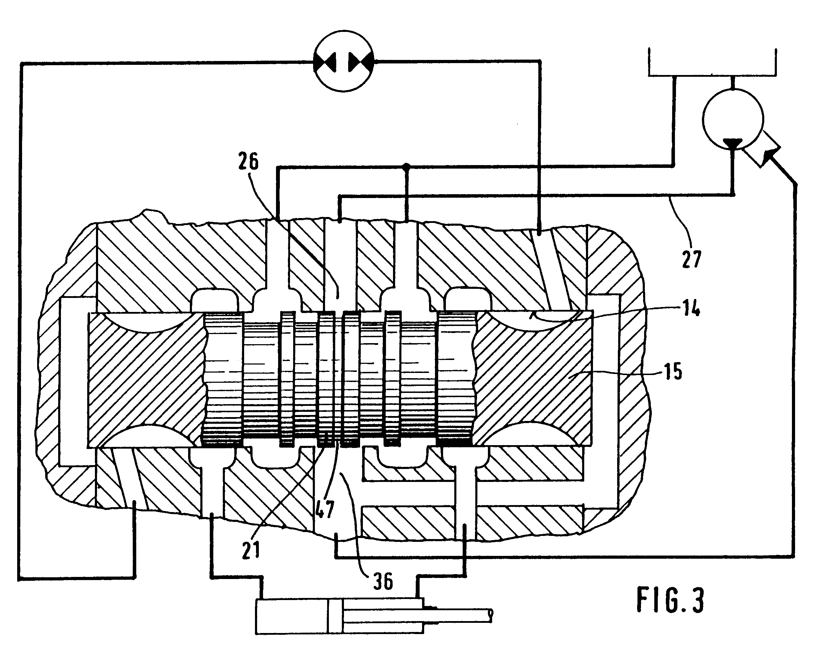

Das zweite, in Fig. 3 dargestellte Ausführungsbeispiel unterscheidet sich von dem ersten in den Fig. 1 und 2 dargestellten Ausführungsbeispiel nur dadurch, daß die Blende hier in der neutralen Mittelstellung der Steuerventileinrichtung 18 nicht vollständig geschlossen ist, sondern einen geringen Mindestquerschnitt besitzt. Dazu ist an dem zentralen Kolbenbund 21 des Ventilkolbens 15 ein umlaufender Einstich 47 angebracht, durch den eine Verbindung geschaffen wird von der Einmündung 26 der Druckleitung 27 in die Ventilbohrung 14 zu dem gemeinsamen Anschluß 36. Über dem Einstich 47 fließt bei nicht betätigter Lenkung ein von dem Querschnitt des Einstiches 47 abhängiger Druckmittelstrom zum Temperieren durch die Steuerventileinrichtung 18.

Es wäre vorstellbar, eine derartige Kurzschlußverbindung durch die Steuerventileinrichtung 18 dadurch herzustellen, daß die axiale Erstreckung des Querschnittes der Einmündung 26 in die Ventilbohrung 14 größer

EP 0 397 692 B1

ist als die Breite des zentralen Kolbenbundes 21. Bei einer solchen Anordnung ist jedoch die Größe des Verbindungsquerschnittes zwischen der Einmündung 26 und dem gemeinsamen Anschluß 36 von der exakten Mittelstellung des Ventilkolbens 15 abhängig. Bei einem Einstich 47 ist der Querschnitt unabhängig von der exakten Mittelstellung des Ventilkolbens 15.

Im folgenden wird die Funktion der Lenkeinrichtung anhand des Ausführungsbeispieles der Fig. 2 näher beschrieben. Die Verstellpumpe 28 ist so ausgeführt, daß sie versucht, zwischen der Druckleitung 27 und der Steuerleitung 38 eine konstante Druckdifferenz aufrechtzuerhalten. Da die axiale Erstreckung des Einmündungsquerschnittes 26 der Druckleitung 27 in die Ventilbohrung 14 kleiner ist als die Breite des zentralen Kolbenbundes 21, ist dies in der neutralen Mittelstellung des Ventilkolbens 15 bei einem gegen Null gehenden Druckmittelstrom der Verstellpumpe 28 möglich, und zwar deshalb, weil der Verbindungsquerschnitt zwischen der Druckleitung 27 und der Steuerleitung 38 ebenfalls gegen Null geht. Die Verbindung der Steuerleitung 38 mit dem Druckmittelbehälter 30 ist in der neutralen Mittelstellung des Ventilkolbens 15 erforderlich, damit die Druckdifferenz bei einem insgesamt niedrigen Druckniveau aufrechterhalten werden kann.

Wird der Ventilkolben 15 beispielsweise nach links verschoben, so wird die Verbindung von der Kolbennut 22 zu dem gemeinsamen Anschluß 36 und zwischen der Kolbennut 23 und der Rücklaufnut 33 unterbrochen. Damit ist die Verbindung von der Steuerleitung 38 zu dem Druckmittelbehälter 30 getrennt. Etwa gleichzeitig wird die Verbindung von der Einmündung 26 der Druckleitung 27 zu der Kolbennut 23 hergestellt. Dadurch ist die Druckleitung 27 über die Steueröffnung 35B mit einem von der Stellung des Ventilkolbens 15 abhängigen Querschnitt mit der Steuerleitung 38 verbunden. Die Steueröffnung 35B bildet dabei die variable Blende 35, wie dies oben beschrieben ist. Zur Aufrechterhaltung der konstanten Druckdifferenz zwischen der Druckleitung 27 und der Steuerleitung 38 muß über die Blende 35 ein von dem Querschnitt der Blende 35 abhängiger Druckmittelstrom fließen. Dieser Druckmittelstrom fließt über die Kolbennut 23, den gemeinsamen Anschluß 36 und den hinter der Blende 35 liegenden Abschnitt 37 der Druckleitung 27 zu dem rechten stirnseitigen Druckraum 44, innen durch den Ventilkolben 15 hindurch zu dem linken stirnseitigen Druckraum 43. Von dort wird das Druckmittel über die linken Verteilerlängsnuten 41 und die Leitung 45 zu der Dosiereinrichtung 7 geleitet. Von den auf der Ablaufseite der Dosiereinrichtung 7 liegenden Verdrängerkammern 8 erfolgt die Zuführung des Druckmittels zu dem Lenkmotor 20 in bekannter Weise über die Leitung 46 und die rechten Kommutierungsnuten 42. Ohne Berücksichtigung von Strömungsverlusten wird sich der Druck in der Druckleitung 27 entsprechend dem Widerstand am Lenkmotor 20 einstellen. Bei maximal ausgelenktem Ventilkolben 15 hat die Blende 35 ihren maximalen Querschnitt erreicht. Eine Verbindung der Einmündung 26 der Druckleitung 27 in die Ventilbohrung 14 und des gemeinsamen Anschlusses 36 mit den Rücklaufnuten 32 oder 33 ist dabei ausgeschlossen wegen der oben beschriebenen Anordnung der Kolbenbunde 24 und 25.

Bezugzeichen

| 1 | Zahnring |
|---|---|
| 2 | Deckel |
| 3 | Umlenkzwischenring |
| 4 | Gehäuse |
| 5 | Abschlußdeckel |
| 6 | Zahnrad |
| 7 | Dosiereinrichtung |
| 8 | Verdrängerkammer |
| 9 | - |
| 10 | Gelenkwelle |
| 11 | Mitnehmerstift |
| 12 | Antriebswelle |
| 13 | Betätigungshülse |
| 14 | Ventilbohrung |
| 15 | Ventilkolben |
| 16 | Steilgewindeprofil |
| 17 | Federelement |
| 18 | Steuerventileinrichtung |
| 19 | - |
| 20 | Lenkmotor |
| 21 | zentraler Kolbenbund |
| 22 | Kolbennut |

4

| 23 | Kolbennut |
| 24 | Kolbenbund |
| 25 | Kolbenbund |
| 26 | Einmündung |
| 27 | Druckleitung |
| 28 | Verstellpumpe |
| 29 | - |
| 30 | Druckmittelbehälter |
| 31 | zylindrischer Gehäusesteg |
| 32 | Rücklaufnut |
| 33 | Rücklaufnut |
| 34 | Rücklaufleitung |
| 35 | Blende |
| 35A | Steueröffnung |
| 35B | Steueröffnung |
| 36 | gemeinsamer Anschluß |
| 37 | beschnitt der Druckleitung 27 |
| 38 | Steuerleitung |
| 39 | - |
| 40 | Verstelleinrichtung |
| 41 | Verteilerlängsnut |
| 42 | Verteilerlängsnut |
| 43 | Druckraum |
| 44 | Druckraum |
| 45 | Leitung |
| 46 | Leitung |
| 47 | Einstich |

**Patentansprüche**

1. Hydrostatische Hilfskraft-Lenkeinrichtung, insbesondere für Kraftfahrzeuge, mit einer von einem Lenkhandrad antreibbaren, Verdrängerkammern (8) aufweisenden Dosiereinrichtung (7), und einer in Abhängigkeit von der Drehung des Lenkhandrades aus einer neutralen Mittelstellung gegen die Kraft von Federelementen (17) in zwei Betätigungsrichtungen verstellbaren Steuerventileinrichtung (18), an die eine Druckleitung (27) einer Verstellpumpe (28) und eine zu einem Druckmittelbehälter (30) führende Rücklaufleitung (34) angeschlossen sind,
– wobei in der Druckleitung (27) eine Blende (35) angeordnet ist und in Strömungsrichtung hinter der Blende (35) von der Druckleitung (27) eine zu einer Verstelleinrichtung (40) der Verstellpumpe (28) führende Steuerleitung (38) abzweigt,
– wobei die Steuerleitung (38) in der neutralen Mittelstellung der Steuerventileinrichtung (18) mit der Rücklaufleitung (34) verbunden ist, und
– wobei ein in einer Ventilbohrung (14) verschiebbarer Ventilkolben (15) der Steuerventileinrichtung (18) einen im axialen Bereich der Einmündung (26) der Druckleitung (27) in die Ventilbohrung (14) liegenden zentralen Kolbenbund (21) mit je einer benachbarten, durch je einen Kolbenbund (24, 25) begrenzten Kolbennut (22, 23) aufweist, dadurch **gekennzeichnet**,
– daß der hinter der Blende (35) liegende Abschnitt (37) der Druckleitung (27) und die Steuerleitung (38) durch einen im Bereich des zentralen Kolbenbundes (21) liegenden gemeinsamen Anschluß (36) an die Ventilbohrung (14) angeschlossen sind,
– daß die Blende (35) zwischen dem Querschnitt der Einmündung (26) der Druckleitung (27) in die Ventilbohrung (14) und dem gemeinsamen Anschluß (36) angeordnet und zwischen dem zentralen Kolbenbund (21) und der Einmündung (26) bzw. dem Anschluß (36) gebildet ist und einen in Abhängigkeit von der Schaltstellung der Steuerventileinrichtung (18) veränderbaren Querschnitt aufweist, und
– daß der Querschnitt der Blende (35) in der neutralen Mittelstellung der Steuerventileinrichtung (18) seinen kleinsten Wert besitzt und durch eine Verstellung der Steuerventileinrichtung (18) in beiden Richtungen vergrößerbar ist.

2. Hilfskraft-Lenkeinrichtung nach Anspruch 1, dadurch **gekennzeichnet**, daß die Breite des zentralen Kolbenbundes (21) größer ist als die größte axiale Erstreckung des Querschnittes der Einmündung (26) der Druckleitung (27) in die Ventilbohrung (14).

3. Hilfskraft-Lenkeinrichtung nach Anspruch 2, dadurch **gekennzeichnet**, daß die Breite des zentralen Kolbenbundes (21) kleiner ist als die kleinste axiale Erstreckung des Querschnittes des gemeinsamen Anschlusses (36).

4. Hilfskraft-Lenkeinrichtung nach Anspruch 3, dadurch **gekennzeichnet,** daß die Kolbennuten (22, 23) in der neutralen Mittelstellung der Steuerventileinrichtung (18) mit zwei in der Ventibohrung (14) angeordneten Rücklaufnuten (32, 33) verbunden ist.

5. Hilfskraft-Lenkeinrichtung nach Anspruch 2, dadurch **gekennzeichnet**, daß der zentrale Kolbenbund (21) an seinem Umfang einen umlaufenden Einstich (47) für eine Verbindung der Einmündung (26) der Druckleitung (27) in die Ventilbohrung (14) mit dem gemeinsamen Anschluß (36) aufweist.

## Claims

1. A hydrostatic power-assisted steering device, more particularly for motor vehicles, with a metering device (7) drivable by a steering wheel and comprising displacement chambers (8), and a control valve device (18), which is adjustable as a function of the rotation of the steering wheel from a neutral central position against the force of spring elements (17) in two actuating directions and to which are connected a pressure line (27) of an adjusting pump (28) and a return line (34) leading to a pressure medium container (30),
   – a diaphragm (35) being arranged in the pressure line (27) and a control line (38) leading to an adjusting device (40) of the adjusting pump (28) branching off from the pressure line (27) downstream of the diaphragm (35) in the direction of flow,
   – the control line (38) being connected in the neutral central position of the control valve device (18) with the return line (34), and
   – a valve piston (15) of the control valve device (18) displaceable in a valve bore (14) comprising a central piston collar (21), which is arranged in the axial region of the opening (26) of the pressure line (27) into the valve bore (14) and on either side comprises an adjacent piston groove (22, 23), which is defined in each case by a piston collar (24, 25), characterised in that
   – the section (37) of the pressure line (27) downstream of the diaphragm (35) and the control line (38) are connected to the valve bore (14) by means of a common connection (36) lying in the region of the central piston collar (21),
   – the diaphragm (35) is arranged between the cross section of the opening (26) of the pressure line (27) into the valve bore (14) and the common connection (36), is formed between the central piston collar (21) and the opening (26) or the connection (36) and comprises a cross section which is adjustable as a function of the switching position of the control valve device (18), and
   – in the neutral central position of the control valve device (18), the cross section of the diaphragm (35) is at its smallest value and can be enlarged by an adjustment of the control valve device (18) in both directions.

2. A power-assisted steering device according to claim 1, characterised in that the width of the central piston collar (21) is greater than the largest axial extension of the cross section of the opening (26) of the pressure line (27) into the valve bore (14).

3. A power-assisted steering device according to claim 2, characterised in that the width of the central piston collar (21) is smaller than the smallest axial extension of the cross section of the common connection (36).

4. A power-assisted steering device according to claim 3, characterised in that, in the neutral central position of the control valve device (18), the piston grooves (22, 23) are connected with two return grooves (32, 33) arranged in the valve bore (14).

5. A power-assisted steering device according to claim 2, characterised in that on its periphery the central piston collar (21) comprises a circumferential recess (47) for connecting the opening (26) of the pressure line (27) into the valve bore (14) with the common connection (36).

## Revendications

1. Servodirection hydrostatique, notamment pour véhicules à moteur, comportant un dispositif de dosage (7) actionné par un volant à main et pourvu de chambres de refoulement (8), et un dispositif distributeur (18) qui est mobile dans deux sens d'actionnement contre la force d'éléments à ressort (17) à partir d'une position médiane neutre, en fonction de la rotation du volant, et auquel sont raccordés un conduit de pression (27) venant d'une servopompe (28) et un conduit de retour (34) allant à un réservoir de fluide (30),
   – dans laquelle un étranglement (35) est disposé dans le conduit de pression (27) et, en aval de cet étranglement (35), un conduit de commande (38) est dérivé du conduit de pression (27) et mène à un dispositif de réglage (40) de la servopompe (28),

– et dans laquelle le conduit de commande (38) est raccordé au conduit de retour (34) dans la position médiane neutre du dispositif distributeur (18),

– et dans laquelle un piston de soupape (15), agencé pour coulisser dans un alésage de soupage (14) du dispositif distributeur (18), comporte un collet central (21) situé dans la zone axiale du débouché (26) du conduit de pression (27) dans l'alésage de soupape (14) et flanqué de gorges de piston (22, 23) dont chacune est délimitée par un collet de piston correspondant (24, 25), caractérisée :

– en ce que le tronçon (37) du conduit de pression (27) situé en aval de l'étranglement (35) et le conduit de commande (38) sont raccordés à l'alésage de soupape (14) par un raccordement commun (36) situé dans la zone du collet central (21),

– en ce que l'étranglement (35) est disposé entre la section transversale du débouché (26) du conduit de pression (27) dans l'alésage de soupape (14) et le raccordement commun (36) et est ménagé entre le collet central (21) et ledit débouché (26) ou ledit raccordement (36) et présente une section variable en fonction de la position d'actionnement du dispositif distributeur (18), et en ce que la section de l'étranglement (35) a une valeur minimale dans la position médiane neutre du dispositif distributeur (18) et croît par actionnement du dispositif distributeur (18) dans les deux sens.

2. Servodirection hydrostatique selon la revendication 1, caractérisée en ce que la largeur du collet central (21) est supérieure à la plus grande extension axiale de la section du débouché (26) du conduit de pression (27) dans l'alésage de soupage (14).

3. Servodirection hydrostatique selon la revendication 2, caractérisée en ce que la largeur du collet central (21) est inférieure à la plus petite extension axiale de la section du raccordement commun (36).

4. Servodirection hydrostatique selon la revendication 3, caractérisée en ce que, dans la position médiane neutre du disposition distributeur (18), les gorges de piston (22, 23) sont reliées à deux gorges de retour (32, 33) ménagées dans l'alésage de soupage (14).

5. Servodirection hydrostatique selon la revendication 2, caractérisée en ce que le collet central (21) comporte sur son pourtour une entaille périphérique (47) reliant le débouché (26) du conduit de pression (27) dans l'alésage de soupage (14) audit raccordement commun (36).

FIG.1

FIG.2

EP 0 397 692 B1

FIG.3